# EUROPÄISCHE PATENTSCHRIFT

(11) **EP 1 232 080 B1**
(45) Veröffentlichungstag und Bekanntmachung des Hinweises auf die Patenterteilung: **05.10.2005**
(21) Anmeldenummer: 00985081.9
(22) Anmeldetag: 23.11.2000
(51) Int. Cl.: B60S 9/02

(54) **STÜTZVORRICHTUNG**
SUPPORT DEVICE
DISPOSITIF D'APPUI

(30) Priorität: 27.11.1999 DE 19957244
(43) Veröffentlichungstag der Anmeldung: 21.08.2002
(73) Patentinhaber: Jost-Werke GmbH & Co. KG, 60528 Frankfurt am Main (DE)
(72) Erfinder: ALGÜERA GALLEGO, José, Manuel, 63739 Aschaffenburg (DE); MÜLLER, Gerald, 63179 Obertshausen (DE); PFISTER, Steffen, 63225 Langen (DE)
(74) Vertreter: Fuchs Mehler Weiss & Fritzsche
(86) Internationale Anmeldenummer: PCT/EP2000/011666
(87) Internationale Veröffentlichungsnummer: WO 2001/040037

(56) Entgegenhaltungen:
- EP-A- 0 322 634
- EP-A- 0 430 643
- GB-A- 2 207 102

## Beschreibung

Die Erfindung betrifft eine Stützvorrichtung für Sattelauflieger mit einem Stützbein, an dessen unterem Ende eine Fußaufnahmeeinrichtung angeordnet ist, und mit einem Stützfuß mit einer Fußplatte, mit mindestens einem Dämpfungselement, mit einer Schwenklagereinrichtung und mit einer Halterung zur Befestigung des Stützfußes an der Fußaufnahmeeinrichtung.

Stützvorrichtungen sind an der Unterseite von Sattelaufliegern in deren vorderen Bereichen in der Regel paarweise angeordnet und kommen immer dann zum Einsatz, wenn der Sattelauflieger von seiner Zugmaschine getrennt und für sich abgestellt wird. Bei luftgefederten Sattelaufliegern ist es bekannt, daß nach einer mehr oder weniger langen Standzeit Luft aus den Federn entweicht, was zur Folge hat, daß der Heckbereich des Sattelaufliegers absackt, so daß dieser eine schräge bzw. nach hinten geneigte Stellung in bezug auf den Boden einnimmt. Zu diesem Zweck müssen die Stützfüße bzw. deren Fußplatten schwenkbar angeordnet sein, um diese Schräglage auszugleichen. Das gleiche gilt auch, wenn der Sattelauflieger auf unebenem Gelände abgestellt wird. Zusätzlich zur Schwenkbarkeit des Fußes bzw. der Fußplatte ist es wünschenswert, daß beim Ausfahren der Stützvorrichtungen die beweglichen Teile der Stützvorrichtung sanft auf dem Boden aufsetzen, um Beschädigungen zu vermeiden. Hierzu sind in den Stützfüßen entsprechende Dämpfungselemente vorgesehen.

Da es sehr schwierig ist, all diesen Randbedingungen mit nur einer Fußausführung gerecht zu werden, werden in der Regel je nach Einsatzbedingungen unterschiedliche Fußvarianten verwendet.

Die benötigte Ausführung muß im Regelfall vor dem Kauf der Stützwinde festgelegt werden, da der Stützfuß Bestandteil davon ist und dementsprechend darauf zu montieren ist.

Die unterschiedliche Ausführung des Fußes bedingt meist auch unterschiedliche Vorkehrungen und Vorbearbeitungsstufen an der Stützwinde selbst. Dadurch entsteht für jeden Fußtyp eine jeweils spezifische Stützwindenausführung. Dies hat den Vorteil, daß Fuß und Stützwinde optimal aufeinander abgestimmt werden können, es ergeben sich aber auch einige Nachteile.

So müssen im Fertigungsprozeß der Stützwinde sehr viele für jeden Typ unterschiedliche Arbeiten durchgeführt werden, was einen entsprechenden Aufwand an Werkzeugen, Vorrichtungen, Bevorratung von Material, Platzbedarf und Logistik erfordert. Zudem hat der Endverbraucher oder der Zwischenhändler nach der Herstellung der Stützwinde im Regelfall nicht mehr die Möglichkeit, unterschiedliche Fußtypen gegeneinander auszutauschen.

Es ist daher sinnvoll, Fußtypen zu entwickeln, die möglichst vielseitig sind und demnach eine große Bandbreite in ihren Anwendungen aufweisen.

Zum heutigen Stand der Technik gehört eine Fußausführung, die im wesentlichen ein starres Gebilde ist, das über eine tellerförmige Aufstandsfläche verfügt und um eine Achse, die im Innenrohr der Stützwinde horizontal und quer zur Fahrtrichtung gelagert ist, schwenken kann. Der Stützfuß kann sich gewissen Neigungen der Fahrbahn, z.B. Auffahrrampen, Steigungen und ähnlichen anpassen und somit das Abstellen des Sattelaufliegers ermöglichen.

Durch die an sich steife Ausführung des Stützfußes werden jedoch Stoßbelastungen, wie sie beispielsweise beim Rangieren der Auflieger auftreten, direkt auf die Stützwinde und mittelbar auch auf das Fahrzeug übertragen. Dies kann auf Dauer zu Funktionsstörungen oder sogar Beschädigungen an beiden führen.

Um solche Beschädigungen zu reduzieren oder gar zu vermeiden, gibt es Fußtypen, die über elastische Elemente verfügen, die die kinematische Energie des Stoßes aufnehmen und somit die mechanischen Bauteile schützen sollen.

Aus der DE 31 19 359 A1 ist eine Stützvorrichtung bekannt, bei der am unteren Ende des ausfahrbaren Stützenteils eine dieses Stützenteil seitlich überragende Bodenplatte vorgesehen ist, wobei zwischen dieser Bodenplatte und der Fußplatte ein elastischer Druckkörper, der auch als Dämpfungselement bezeichnet wird, aus Gummi angeordnet ist. Ein an der Fußplatte angeschweißter Haltering übergreift mit einem oberen Randabschnitt den seitlich abstehenden ringförmigen Teil der Bodenplatte, wobei zwischen dem Haltering und dem ausfahrbaren Stützenteil ein gewisses Spiel vorhanden ist. Der Schwenkwinkel und der Federweg der Fußplatte wird durch die Zusammendrückbarkeit des elastischen Druckkörpers und dem Abstand zwischen dem Haltering und dem ausfahrbaren Stützenteil begrenzt. Eine Schwenklagerung ist bei dieser Stützvorrichtung nicht vorgesehen. Diese Konstruktion ermöglicht nur eine begrenzte Anpassung der Fußplatte an größere Bodenunebenheiten, wobei das Dämpfungselement sowohl beim Aufsetzen des Fußes in vertikaler Richtung als auch durch ein Verkippen des Fußes deformiert wird.

Aus der EP 0 430 643 A2 ist ein Stützfuß bekannt, bei dem die Befestigung an der Fußaufnahmeeinrichtung mit der Schwenklagerung des Fußes identisch ist. Ein rohrförmiges Lagerelement ist in einem rechteckigen Gehäuse der Fußaufnahmeeinrichtung angeordnet und in Langlöchern von zwei vertikalen, auf der Fußplatte befestigten Platten in vertikaler Richtung beweglich gehalten. Zwischen dem Gehäuse und der Fußplatte ist ein Dämpfungselement angeordnet, das beim Aufsetzen des Fußes komprimiert wird. Durch ein Verschwenken des Fußes erfolgt eine zusätzliche Deformation in Querrichtung, wobei sich das Gehäuse über das Dämpfungselement schieben muß. Diese Anordnung besitzt mehrere Nachteile.

Das Dämpfungselement wird erheblichen unterschiedlichen Belastungen ausgesetzt, was zu schneller Materialermüdung führt. Der Schwenkvorgang wird durch das Dämpfungselement behindert und begrenzt. Beim Einfahren des Stützfußes bleibt dieser in seiner verschwenkten Stellung, weil das Dämpfungselement ein Zurückschwenken in die Ausgangslage verhindert. Beim wiederholten Absenken des Stützfüßes kann dies zu Behinderungen und Beschädigungen des Fußes führen.

In der US-3,666,290 wird ein Stützfuß beschrieben, bei dem zwischen einer an der Stirnseite des Stützrohres angebrachten Platte und der Fußplatte zwei Dämpfungselemente angeordnet sind. Oberhalb der Dämpfungselemente ist eine Schwenklagerung vorgesehen, die aus einem durch das Stützrohr gesteckten Bolzen besteht, der in vertikaler Richtung in zwei Langlöchern von zwei auf der Fußplatte befestigten vertikalen Platten beweglich angeordnet sind. Auch bei dieser Stützfußanordnung werden die Dämpfungselemente beim Verschwenken zusätzlich deformiert, wodurch der Schwenkwinkel begrenzt wird.

Ausgehend von der US-3,666,290 ist es Aufgabe der Erfindung, eine Stützvorrichtung mit einem Stützfuß zu schaffen, der eine verbesserte Schwenkbarkeit aufweist, wobei das Dämpfungselement einer geringeren Deformation unterworfen werden soll.

Diese Aufgabe wird mit einer Stützvorrichtung gelöst, bei der die Schwenklagereinrichtung unterhalb des Dämpfungselementes angeordnet ist.

Dadurch wird die Kompression des Dämpfungselementes von der Schwenkbewegung des Stützfußes vollständig entkoppelt. Die Schwenkbewegung des Stützfußes wird durch das Dämpfungselement nicht behindert und umgekehrt wird durch die Schwenkbewegung keine zusätzliche Deformation des Dämpfungselementes verursacht. Das Dämpfungselement wird beim Aufsetzen des Fußes lediglich in vertikaler Richtung komprimiert.

Ein weiterer Vorteil besteht darin, daß Biegekräfte, die bei Belastung auf die Stützvorrichtung ausgeübt werden, weitaus besser aufgefangen werden können, was darauf zurückzuführen ist, daß die Schwenklagereinrichtung an der tiefsten Stelle der Stützvorrichtung angeordnet ist. Dementsprechend können auch die auf der Fußplatte befestigten vertikal ausgerichteten Lagerplatten kürzer ausgeführt werden, als dies bei den Stützfüßen gemäß des Standes der Technik möglich ist.

Vorzugsweise stützt sich das Dämpfungselement auf einem nicht rotierbaren Bauteil der Schwenklagereinrichtung ab. Es wird dadurch bezüglich der Bauhöhe eine insgesamt kompakte Bauweise realisiert.

Vorzugsweise ist die Halterung zur Befestigung des Stützfußes in vertikaler Richtung beweglich an der Fußaufnahmeeinrichtung angeordnet. Diese Beweglichkeit ist notwendig, damit sich der Fuß bei Belastung relativ zum Stützbein bewegen kann und damit das Dämpfungselement seine Funktion erfüllen kann.

Hierzu kann die Halterung zwei vertikal ausgerichtete Langlöcher aufweisen.

Vorteilhafterweise ist die Schwenklagereinrichtung ebenfalls an der Halterung befestigt.

Durch diese Maßnahme wird erreicht, daß die Halterung in der Fußaufnahmeeinrichtung lediglich in vertikaler Richtung bewegt wird, wodurch das Dämpfungselement lediglich komprimiert wird, wobei aber durch die gleichzeitige Anordnung der Schwenklagereinrichtung an der Halterung die Schwenkbarkeit der Fußplatte gewährleistet wird.

Vorteilhafterweise weist die Schwenklagereinrichtung mindestens ein horizontales Lagerelement und zwei senkrecht auf der Fußplatte angeordnete Lagerplatten auf, die auf dem Lagerelement schwenkbar gelagert sind.

Vorteilhafterweise ist das Lagerelement ein Rohr, das in die Halterung eingesteckt wird.

Die Halterung ist gemäß einer weiteren Ausführungsform vorzugsweise ein U-förmiger Bügel mit zwei aufgerichteten Schenkeln, wobei in jedem Schenkel übereinander zwei Öffnungen für die Befestigung an einer Fußaufnahmeeinrichtung und zur Aufnahme der Schwenkiagereinrichtung vorgesehen sind.

Gemäß einer weiteren Ausführungsform kann die Halterung aus zwei länglichen Halteplatten bestehen, wobei in jeder Platte übereinander zwei Öffnungen für die Befestigung an einer Fußaufnahmeeinrichtung und zur Aufnahme der Schwenklagerung angeordnet sind.

Die bei diesen beiden Ausführungsformen jeweils oberen Öffnungen werden durch die bereits erwähnten Langlöcher gebildet.

Am Lagerelement liegen vorzugsweise mindestens zwei gegenüberliegende, an der Fußaufnahmeeinrichtung angeordnete und durch das Dämpfungselement hindurchgreifende Stabilisierungsnocken an. Dadurch wird verhindert, daß das Lagerelement, das unterhalb des Dämpfungselementes angeordnet ist, eine Schwenkbewegung ausführt. Diese Maßnahme ist dann sinnvoll, wenn die Halterung zusätzlich zu der vertikalen Beweglichkeit an das Fußaufnahmeeinrichtung auch eine Schwenkbewegung zulassen würde. Dadurch wird verhindert, daß das Dämpfungselement außer der Kompression auch einer Deformation in horizontaler Richtung unterworfen wird. Es wird dadurch eine insgesamt stabile Anordnung der Halterung erzielt, wobei sich die Schwenkbewegung ausschließlich auf die Schwenklagereinrichtung beschränkt.

Vorteilhafte Auführungsformen der Erfindung werden nachfolgend anhand der Zeichnungen näher erläutert.

Es zeigen:
- Figuren 1 und 2: eine Stützvorrichtung mit Stützfuß in zwei Seitenansichten ohne Belastung,
- Figuren 3 und 4: die in den Figuren 1 und 2 gezeigte Stützvorrichtung unter Belastung,
- Figur 5: die Stützvorrichtung in Seitenansicht mit verschwenktem Stützfuß,
- Figuren 6 bis 10: die den Figuren 1 bis 5 entsprechenden Darstellungen einer weiteren Ausführungsform, und
- Figur 11: eine perspektivische Darstellung der Fußaufnahmeeinrichtung von unten.

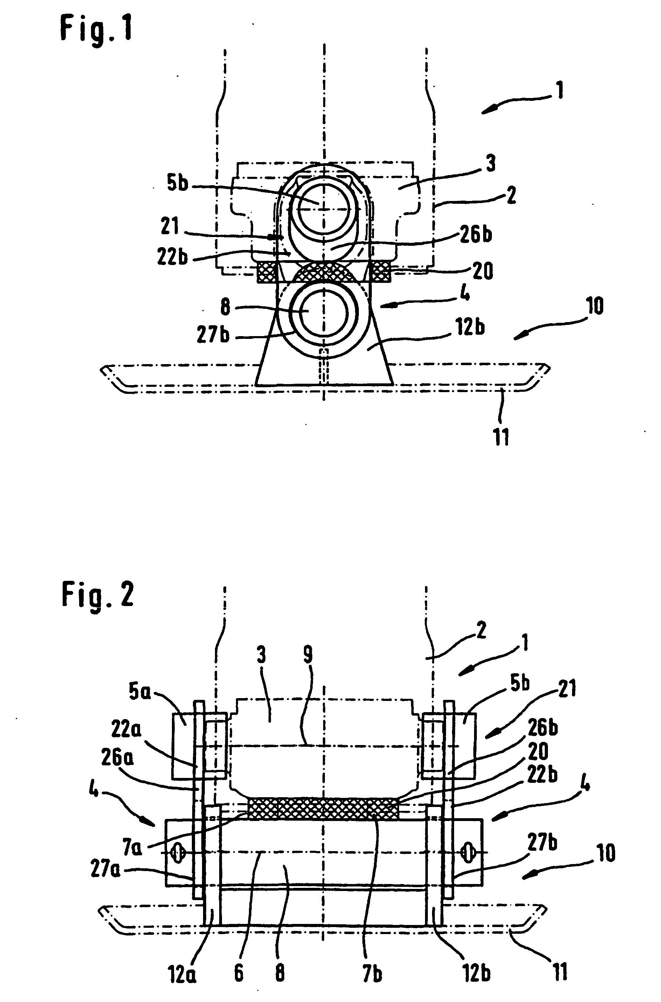

In der Figur 1 ist eine Stützvorrichtung mit einem Stützbein 1 dargestellt, von dem lediglich das untere Ende eines teleskopierbaren Stützrohres 2 zu sehen ist. In dem Stützrohr 2 ist eine Fußaufnahmeeinrichtung 3 befestigt, die zwei nach außen vorstehende Bolzen 5a und b aufweist. An diesen Bolzen 5a, b ist eine Halterung 21 in Form von sind zwei Halteplatten 22a, b angeordnet, die jeweils zwei vertikal ausgerichtete Langlöcher 26a, b aufweisen. Dadurch wird gewährleistet, daß die Halteplatten 22a, b in vertikaler Richtung verschiebbar sind.

Unter den Langlöchern 26a, b sind weitere Öffnungen 27a, b vorgesehen, in die ein horizontales Lagerelement 8 in Form eines Bolzens oder Rohrs eingesteckt ist. Dieses Lagerelement 8 ist Bestandteil der Schwenklagereinrichtung 4 für den Stützfuß 10. Dieser besitzt eine Fußplatte 11, auf der zwei vertikale Platten 12a, b befestigt sind. Diese Platten 12a, b sind drehbar auf dem Lagerelement 8 angeordnet und erlauben ein Verschwenken des Stützfußes 10 um die Schwenkachse 6.

Wie aus der Figur 2 zu entnehmen ist, sind die beiden vertikalen Halteplatten 12a, b zwischen den Halteplatten 22a, b angeordnet.

An der Unterseite der Fußaufnahmeeinrichtung 3 ist ein Dämpfungselement 20 in Form einer elastischen Platte angeordnet. Dieses Dämpfungselement 20 stützt sich auf einem nicht rotierbaren Bauteil, nämlich auf dem Lagerelement 8 ab. Ferner sind an der Unterseite der Fußaufnahmeeinrichtung 3 noch zwei Stabilisierungsnocken 7a, b angeordnet, die an dem Lagerelement 8 angreifen und ein Verschwenken der Schwenklagereinrichtung 4 um die Achse 9 der Fußaufnahmeeinrichtung 3 zu verhindern. Dadurch ist es nicht erforderlich, zusätzliche Maßnahmen an den Halteplatten 22a, b zu ergreifen, um ein Verschwenken an den Bolzen 5a, b zu verhindern.

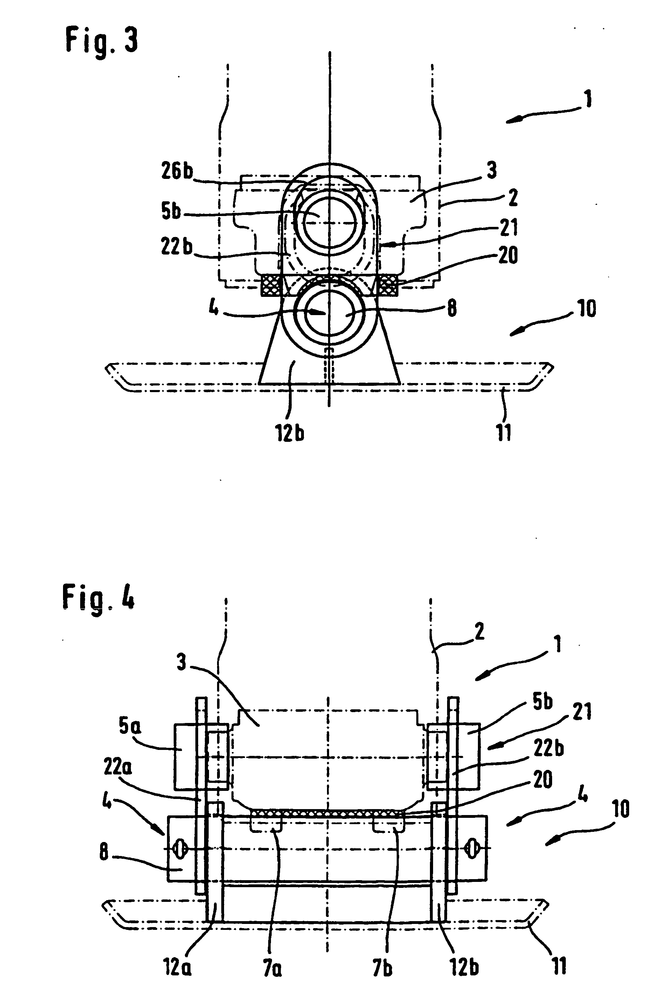

In den Figuren 3 und 4 ist dieselbe Ausführungsform wie in den Figuren 1 und 2 dargestellt, jedoch im belasteten Zustand. Es ist deutlich zu sehen, daß sich die Halteplatte 22b in dem dazugehörigen Langloch 26b verschoben hat, wodurch sich das Stützbein 2 und der Stützfuß 10 genähert haben. Dieser Vorgang führt dazu, daß das Dämpfungselement 20 in seinem mittleren Bereich, wo es auf dem Lagerelement 8 aufliegt, komprimiert wird. Das Dämpfungselement 20 braucht nicht die in den Figuren 1 bis 5 gezeigte Breite aufzuweisen, weil lediglich der mittlere Bereich des Dämpfungselementes auf Kompression beansprucht wird. Es hat sich jedoch als vorteilhaft herausgestellt, weil auch im Hinblick auf die Stabilisierungsnocken 7a, b, die durch das Dämpfungselement 20 hindurchgreifen, eine zusätzliche Fixierung des Dämpfungselementes erreicht werden kann. Hierzu ist eine entsprechende Größe des Dämpfungselementes von Vorteil.

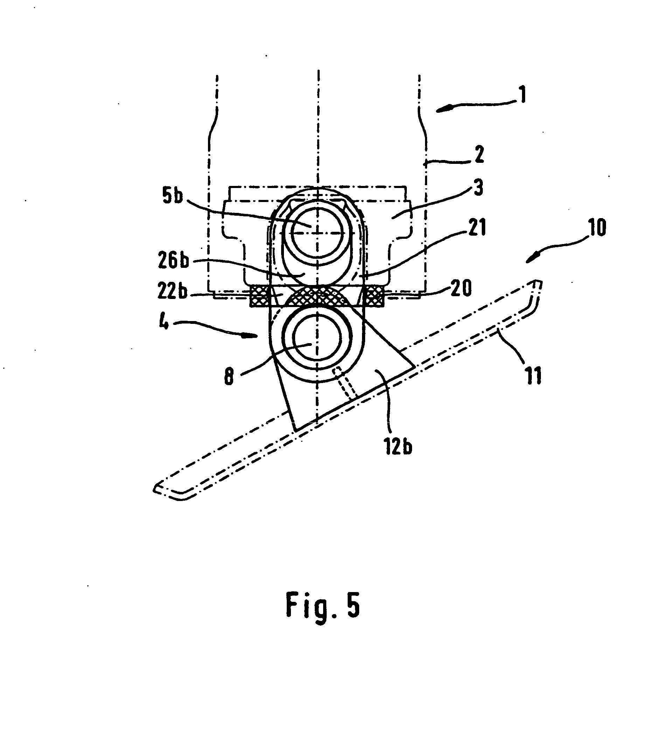

In der Figur 5 ist dieselbe Ausführungsform mit verschwenktem Stützfuß 10 dargestellt. Es ist deutlich zu sehen, daß die Verschwenkung des Stützfußes unabhängig von der Deformation des Dämpfungselementes 20 vonstatten geht und daß das Dämpfungselement das Verschwenken des Stützfußes 10 nicht behindert. Beide Vorgänge sind vollständig entkoppelt.

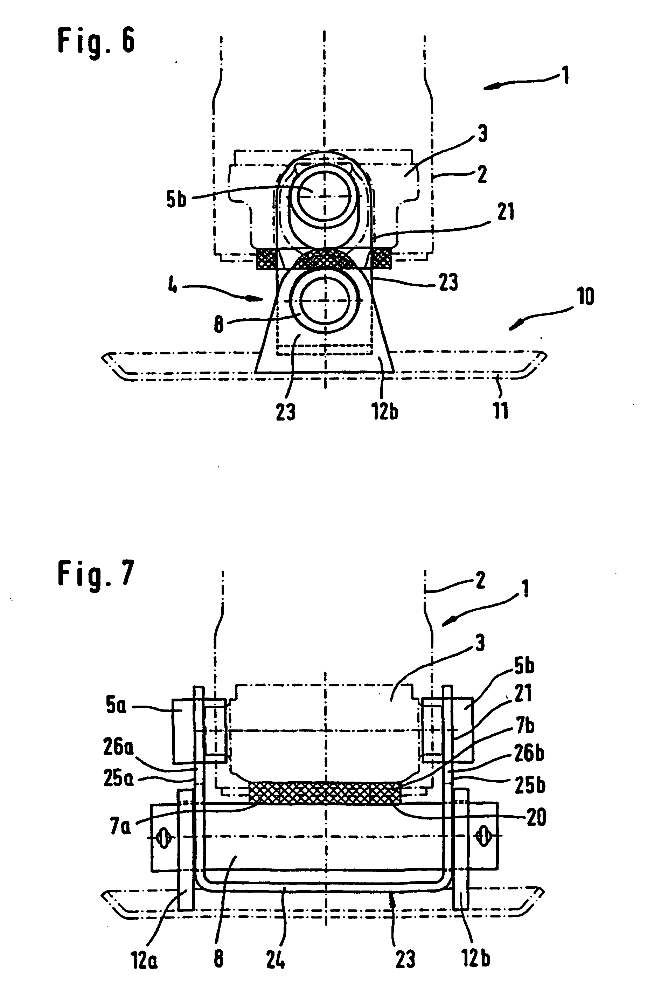

In den Figuren 6 und 7 ist eine weitere Ausführungsform in unbelastetem Zustand dargestellt. Im Unterschied zu der vorangegangenen Ausführungsform gemäß der Figuren 1 bis 5 wird die Halterung 21 anstelle der Halteplatten 22a, b durch einen U-förmigen Bügel 23 gebildet, der zwei aufragende Schenkel 25a, b aufweist, die die Funktion der beiden Halteplatten 22a, b übernehmen. Durch das Verbinden der beiden Schenkel 25a, b über das Mittelteils 24 wird eine größere Stabilität erreicht. Ferner ist gegenüber der zuvor beschriebenen Ausführungsform die Anordnung der vertikalen Platten 12a bezüglich der Schenkel 25a, b vertauscht.

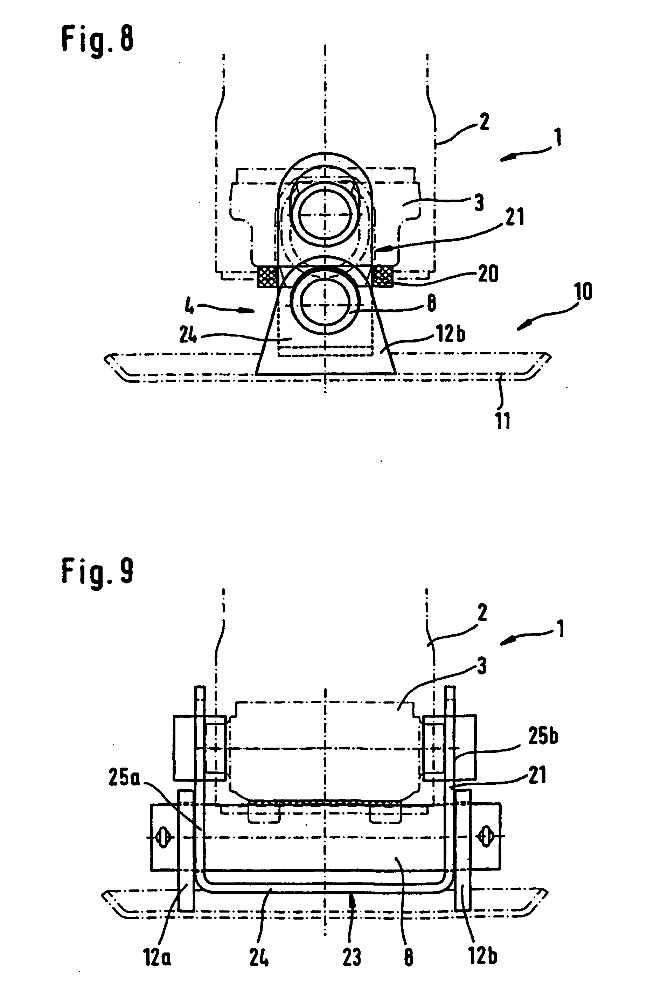

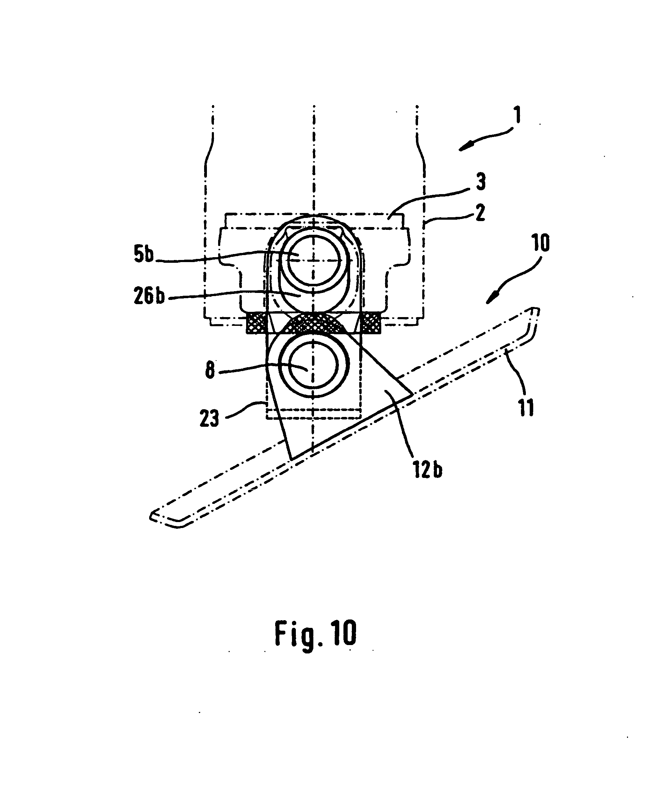

Die Fig. 8 und 9 zeigen diese Ausführungsform im belasteten Zustand und die Fig. 10 mit verschenktem Stützfuß 10.

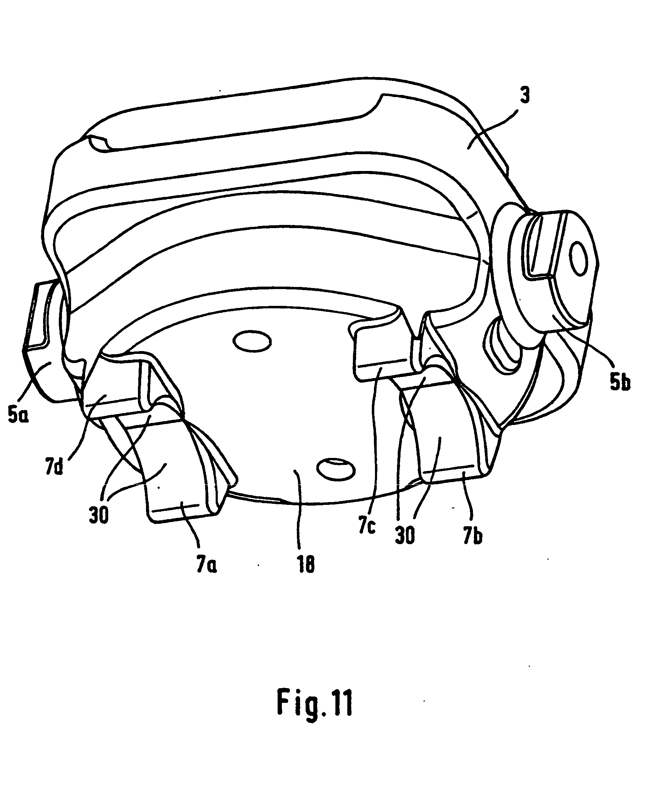

In Figur 11 ist eine perspektivische Unteransicht der Fußaufnahmeeinrichtung 3 dargestellt. Auf der Bodenwand 18 sind vier Stabilisierungsnocken 7a - d angeordnet, die durch das Dämpfungselement 20 hindurchgreifen. Jeder Nocken 7a - d besitzt eine nach unten weisende gekrümmte Fläche 30, die an dem Lagerelement 8 anliegen kann. Die Krümmung der Fläche 30 ist an die Zylinderform des Lagerelements 8 angepaßt. Jeweils zwei Nocken 7a, d und 7b, c umgreifen paarweise die Rolle 21 und verhindern somit die Seitwärtsbewegung des Dämpfungselements 20.

## Patentansprüche

1. Stützvorrichtung für Sattelauflieger mit einem Stützbein, an dessen unterem Ende eine Fußaufnahmeeinrichtung angeordnet ist, und mit einem Stützfuß mit einer Fußplatte, mit mindestens einem Dämpfungselement, mit einer Schwenklagereinrichtung und mit einer Halterung zur Befestigung des Stützfüßes an der Fußaumahmeeinriehtung, **dadurch gekennzeichnet,**
**daß** die Schwenklagereinrichtung (4) unterhalb des Dämpfungselementes (20) angeordnet ist.

2. Stützvorrichtung nach Anspruch 1, **dadurch gekennzeichnet, daß** sich das Dämpfungselement (20) auf einem nicht rotierbaren Bauteil der Schwenklagereinrichtung (4) abstützt.

3. Stützvorrichtung nach Anspruch 1 oder 2, **dadurch gekennzeichnet, daß** die Halterung (21) in vertikaler Richtung beweglich an der Fußaufnahmeeinrichtung (3) angeordnet ist.

4. Stützvorrichtung nach einem der Ansprüche 1 bis 3, **dadurch gekennzeichnet, daß** die Halterung (21) zwei vertikal ausgerichtete Langlöcher (26a, b) aufweist.

5. Stützvorrichtung nach einem der Ansprüche 1 bis 4, **dadurch gekennzeichnet, daß** die Schwenklagereinrichtung (4) an der Halterung (21) befestigt ist.

6. Stützvorrichtung nach einem der Ansprüche 1 bis 5, **dadurch gekennzeichnet, daß** die Schwenklagereinrichtung (4) mindestens ein horizontales Lagerelement (8) und zwei senkrecht auf der Fußplatte angeordnete Lagerplatte (12a, b) aufweist, die auf dem Lagerelement (8) schwenkbar gelagert sind.

7. Stützvorrichtung nach Anspruch 6, **dadurch gekennzeichnet, daß** das Lagerelement (8) ein Rohr ist, das in die Halterung (21) eingesteckt ist.

8. Stützvorrichtung nach einem der Ansprüche 1 bis 7, **dadurch gekennzeichnet, daß** die Halterung (21) ein U-förmiger Bügel (32) mit zwei aufgerichteten Schenkeln (25a, b) ist, wobei an jedem Schenkel (25a, b) übereinander zwei Öffnungen (26a, b; 27a, b) für die Befestigung an der Fußaufnahmeeinrichtung (3) und zur Aufnahme der Schwenklagereinrichtungen (4) angeordnet sind.

9. Stützvorrichtung nach einem der Ansprüche 1 bis 7, **dadurch gekennzeichnet, daß** die Halterung (21) aus zwei länglichen Halteplatten (22a, b) besteht, wobei an jeder Platte (22a, b) übereinander zwei Öffnungen (26a, b; 27a, b) für die Befestigung an der Fußaufnahmeeinrichtung (3) und zur Aufnahme der Schwenklagereinrichtung (4) angeordnet sind.

10. Stützvorrichtung nach einem der Ansprüche 1 bis 9, **dadurch gekennzeichnet, daß** am Lagerelement (8) mindestens zwei gegenüberliegende, an der Fußaufnahmeeinrichtung (3) angeordnete und durch das Dämpfungselement (20) hindurchgreifende Stabilisierungsnocken (7a, b) anliegen.

## Claims

1. Support device for semitrailers with a support leg, at the lower end of which a base holding device is disposed, and with a support base with a base plate, with at least one damping element, with a pivot bearing device and with a mount for attaching the support base to the base holding device,
**characterised in**
**that** the pivot bearing device (4) is disposed below the damping element (20).

2. Support device according to Claim 1, **characterised in that** the damping element (20) is supported on a non-rotatable component of the pivot bearing device (4).

3. Support device according to Claim 1 or 2, **characterised in that** the mount (21) is disposed so as to be vertically mobile at the base holding device (3).

4. Support device according to any one of Claims 1 to 3, **characterised in that** the mount (21) comprises two vertically oriented oblong holes (26a, b).

5. Support device according to any one of Claims 1 to 4, **characterised in that** the pivot bearing device (4) is attached to the mount (21).

6. Support device according to any one of Claims 1 to 5, **characterised in that** the pivot bearing device (4) comprises at least one horizontal bearing element (8) and two bearing plates (12a, b) which are disposed perpendicularly on the base plate and are pivotably mounted on the bearing element (8).

7. Support device according to Claim 6, **characterised in that** the bearing element (8) is a tube which is inserted in the mount (21).

8. Support device according to any one of Claims 1 to 7, **characterised in that** the mount (21) is a U-shaped stirrup (23) with two upright side pieces (25a, b), wherein two openings (26a, b; 27a, b) for the attachment to the base holding device (3) and for holding the pivot bearing devices (4) are disposed one above the other at each side piece (25a, b).

9. Support device according to any one of Claims 1 to 7, **characterised in that** the mount (21) consists of two elongate retaining plates (22a, b), wherein two openings (26a, b; 27a, b) for the attachment to the base holding device (3) and for holding the pivot bearing device (4) are disposed one above the other at each plate (22a, b).

10. Support device according to any one of Claims 1 to 9, **characterised in that** at least two opposite stabilising lobes (7a, b), which are disposed at the base holding device (3) and pass through the damping element (20), lie against the bearing element (8).

## Revendications

1. Dispositif d'appui pour semi-remorque avec une béquille, à l'extrémité inférieure de laquelle est disposé un dispositif de logement de pied, et avec un pied d'appui avec une plaque de pied, avec au moins un élément d'amortissement, avec un dispositif de palier pivotant et avec une attache pour la fixation du pied d'appui au dispositif de logement de pied, **caractérisé en ce que** le dispositif de palier pivotant (4) est disposé sous l'élément d'amortissement (20).

2. Dispositif d'appui selon la revendication 1, **caractérisé en ce que** l'élément d'amortissement (20) s'appuie sur une pièce de construction non rotative du dispositif de palier pivotant (4).

3. Dispositif d'appui selon la revendication 1 ou 2, **caractérisé en ce que** l'attache (21) est disposée sur le dispositif de logement de pied (3) de manière mobile en direction verticale.

4. Dispositif d'appui selon une des revendications 1 à 3, **caractérisé en ce que** l'attache (21) comporte deux trous oblongs (26a, b) orientés verticalement.

5. Dispositif d'appui selon une des revendications 1 à 4, **caractérisé en ce que** le dispositif de palier pivotant (4) est fixé sur l'attache (21).

6. Dispositif d'appui selon une des revendications 1 à 5, **caractérisé en ce que** le dispositif de palier pivotant (4) comporte au moins un élément de palier horizontal (8) et deux plaques de palier (12a, b) disposées verticalement sur la plaque de pied, qui sont placées sur l'élément de palier (8) de manière pivotante.

7. Dispositif d'appui selon la revendication 6, **caractérisé en ce que** l'élément de palier (8) est un tube qui est enfiché dans l'attache (21).

8. Dispositif d'appui selon une des revendications 1 à 7, **caractérisé en ce que** l'attache (21) est un coude en forme de U (32) avec deux bras (25a, b) dressés à la verticale, sachant que sont disposées sur chacun des bras (25a, b) deux ouvertures l'une au dessus de l'autre (26a, b ; 27a, b) pour la fixation au dispositif de logement de pied (3) et pour le logement des dispositifs de palier pivotant (4).

9. Dispositif d'appui selon une des revendications 1 à 7, **caractérisé en ce que** l'attache (21) se compose de deux plaques de support allongées (22a, b), sachant que sur chaque plaque (22a, b) sont disposées deux ouvertures l'une au dessus de l'autre (26a, b ; 27a, b) pour la fixation sur le dispositif de logement de pied (3) et pour le logement du dispositif de palier pivotant (4).

10. Dispositif d'appui selon une des revendications 1 à 9, **caractérisé en ce que** sont en appui sur l'élément de palier (8) au moins deux taquets de stabilisation (7a, b) opposés, disposés sur le dispositif de logement de pied (3) et traversant l'élément d'amortissement (20).
